# EUROPEAN PATENT SPECIFICATION

(11) **EP 0 484 727 B1**
(45) Date of publication and mention of the grant of the patent: **12.07.2000**
(21) Application number: 91117970.3
(22) Date of filing: 22.10.1991
(51) Int. Cl.: A23C 19/05, A23C 19/028

(54) **Method of producing a cheese and preparing it for distribution**
Verfahren zur Herstellung von Käse und seine Vorbereitung zur Verteilung
Procédé de fabrication d'un fromage et sa préparation pour distribution

(30) Priority: 07.11.1990 SE 9003541
(43) Date of publication of application: 13.05.1992
(73) Proprietor: Tetra Laval Holdings & Finance SA, 1009 Pully (CH)
(72) Inventor: Nielsen, John, DK-4653 Karise (DK)
(74) Representative: Sundell, Hakan

(56) References cited:
- EP-A- 0 297 676
- WO-A-85/00501
- WO-A-91/00690
- US-A- 3 899 595
- US-A- 4 268 528
- US-A- 4 401 679

## Description

The present invention concerns a method of producing a cheese and preparing it for distribution, and in this method for production of cheese pretreated milk is first concentrated by the whey being separated from the milk and the concentrated milk obtained being subsequently added to and mixed with additives necessary for coagulation of the milk and other optional additives for cheese production.

The above described method of producing a cheese and preparing it for distribution has several advantages over traditional cheese production which is based on the fact that the pretreated milk without previous concentration is added to and mixed with additives necessary for the production of cheese, e.g. rennet and/or other proteolytic enzymes for coagulation of the milk. Among other things the previous concentration entails that subsequent stages of production can be carried out with a process flow reduced to a corresponding degree and with processing equipment requiring less space and expense as a result of this. In addition through the concentration the advantage is gained that the quantity of additives for coagulation of the milk can be reduced at the same time as a more effective utilisation of these additives is achieved.

In our Swedish patent application no.9003540-3 submitted at the same time as this with the title "Method of producing a cheese and preparing it for distribution" indications are given about how the method described in the introduction can be made more effective and modified to such an extent that it can indeed be carried out completely automated on a rational industrial scale. According to this Swedish patent application no.9003540-3 these further advantages are achieved through concentrating the pretreated milk to a DM content corresponding to the DM content in the finished cheese and drawing off and packaging the mixture of concentrated milk and additives directly into distribution-ready packagings, i.e. carrying out and operating the separation of the whey already during the concentration so long as no further subsequent separation of whey is required with the given consequence that the coagulation and forming of the milk can occur without requirements for previous separate coagulation or forming.

In the Swedish patent application no. 9003540-3 it is further proposed that the concentration of the pretreated milk should preferably be carried out through filtering with the use of an ultra-filtering device whose filter should suitably have such a pore size that all proteins, fats and other constituents valuable for cheese production occurring in the milk are retained in it as pre-cheese retained matter through filtering the extracted concentrated milk and thus the whey separated from the milk does not accompany it, passing freely through the filter.

For further details about the last described method of producing a cheese and preparing it for distribution you are referred to the Swedish patent application no.9003540-3. The cheese produced by the method according to the said Swedish patent application complies in practice with all requirements set for cheese as far as concerns taste, colour, consistency, maturity, DM content and content of fats, protein, salt and other desirable constituents, but either lacks completely or only exhibits imperfectly developed holes or tubular passages which contribute to giving certain types of cheese their typical and easily recognisable appearance which is generally regarded by the consumer as a guarantee of a "genuine" cheese quality. Even if the real reason why such holes or tubular passages either do not occur at all or develop only imperfectly is not fully explained it has been shown in accordance with this invention that the problem can be avoided if there is also added to the concentrated milk together with the remaining additives selected for the cheese production a chemical substance of the type which under the action of lactic acid bacteria occurring in the milk has the capacity to form carbon dioxide gas (CO₂ gas).

An aim of the present invention is therefore to indicate a method of the type described in the introduction which besides all the advantages mentioned in the said Swedish patent application and described above also makes it possible to provide the finished cheese with the desired structure of tubular passages.

This aim is achieved according to the invention through the fact that the method described in the introduction is given the characteristics that the milk is concentrated to a dry matter content (DM content) corresponding to the DM content in the finished cheese, that as one of the aforesaid additives a chemical substance with the capacity to form carbon dioxide gas (CO₂ gas) under the action of lactic acid bacteria occurring in the milk is selected and that the mixture of conentrated milk and additives is filled directly into distribution-ready packagings, through which the coagulation and forming of the milk occurs essentially entirely in the packagings with the result that holes in the coagulated milk developed by CO₂ gas formed contribute to the formation of the desired tubular passage structure in the finished cheese.

As the aforesaid chemical substance for forming CO₂ gas citric acid is preferred, which besides the CO₂ gas desired for the formation of the tubular passages also gives rise during fermentation to other valuable decomposition products, e.g. acetic acid, which has a positive effect on the impression of taste of the cheese. It has here shown itself to be particularly valuable to add the chemical substance or citric acid enclosed in capsules of material with controllable permeability and stability properties so as to be able thereby to influence the citric acid's conversion to carbon dioxide which should most preferably occur slowly in order avoid the risk of incorrect formation of tubular passages in the cheese. An example of such preferred materials is butter fat and liposomes which are microscopic phosphor lipid bubbles and occur naturally in cheese. Liposomes, which are produced for example from lecithin which is often used as an emulsifier in the food industry and which have proved to be particularly easy to control in respect of permeability and stability properties through small changes in the liposome's lipid composition, are particularly preferred. A further advantage is that liposomes distribute themselves uniformly in the cheese's aqueous phase just precisely where the carbon dioxide forms holes after the saturation point of the water has been reached.

The control of the liposomes' permeability and stability properties is effected for example through modifying the liposomes in such a way that they open and release the citric acid as a reacton to signals, e.g. changes in pH or temperature. As a reduction in pH occurs naturally in the cheese after the mixing in of the added lactic acid bacteria in the concentrated milk the composition of the liposomes is preferably modified in such a way that this changhe in pH can be used as an activation signal for the opening of the liposomes and consequent release of the citric acid contained.

Further practical and advantageous embodiments of the method according to the invention have in addition been given the special features mentioned in the sub-claims below.

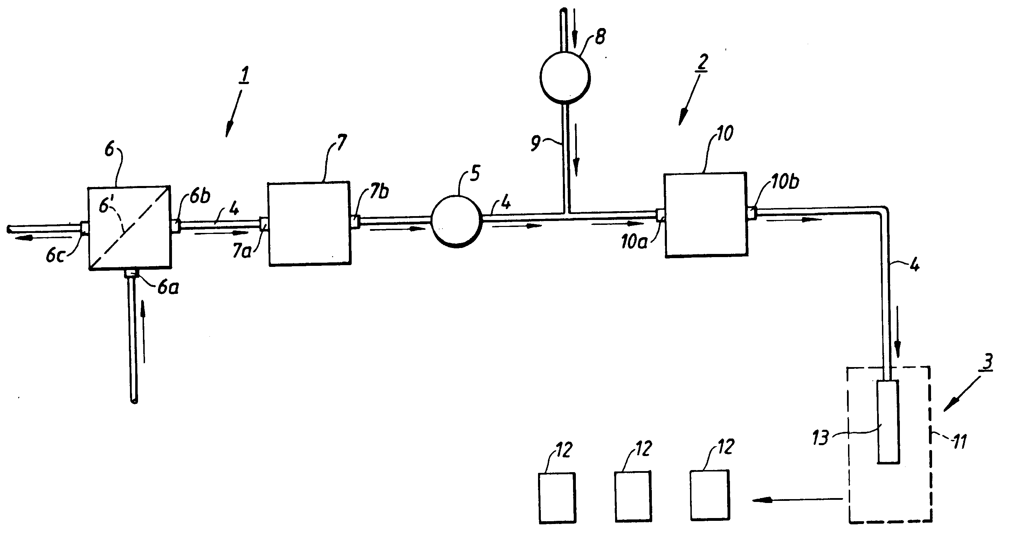

The invention will be further described hereinafter with reference to the enclosed drawing which shows schematically an arrangement suitable for carrying out the method.

The arrangement shown comprises in the main a concentrating/ heating station 1, a dosing/mixing station 2 and a filling station 3, which are connected with each other in the said order by a common process pipe 4. Between the concentrating/heating station 1 and the dosing/mixing station 2 there is in addition a pump 5 attached to the process pipe 4.

The concentrating/hearting station 1 has on the one hand a concentrating device 6 with inlet 6a for incoming pretreated milk, outlet 6b for concentrated milk and outlet 6c for the separated liquid fraction (whey) and on the other hand a heating device 7 provided with an inlet 7a and outlet 7b, with the inlet 7a in the heating device 7 being connected with the outlet 6b in the concentrating device 6 through the said process pipe 4.

Thre concentrating device 6 can conveniently consist of an ultra-filtering device of a type which is in itself well known, whose filter 6' has such a pore size that all proteins, fats and oher constituents valuable for cheese production which occur in the milk remain as pre-cheese retained matter in the concentrated milk extracted. The heating device 7 can for example be a heat exchanger of conventional type with the aid of which the concentrated milk coming in from the device 6 is heated to and maintained for a sufficiently long time at a sufficiently high temperature for killing off all harmful micro-organisms occurring in the milk, e.g. ca 68°C for ca 20 sec.

The dosing/mixing station 2 includes a dosing pump 8 which is connected in-line via a pipe 9 to the process pipe 4 and with the aid of which the additives ncessary for cheese production are added to the concentrated and heated milk pumped by the pump 5 to the station 2. The dosing/mixing station 2 further contains a mixing device 10 provided with an inlet 10a and outlet 10b for mixing the added additives with the concentrated milk.

The filling station 3 consists preferably of a packaging machine of the typpe that is often used to package liquid food such as milk, juice etc. and which forms, fills and closes the finished packagings 12. The filler pipe 13 attached to the packaging machine 12 is here connected with the outlet 10b of the mixing device 10 via the process pipe 4 in such a way that the mixture of concentrated milk and added additives can be fed directly from the mixing device 10 to the filler pipe of the packaging machine for filling into the packagings 12 intended for distribution.

With the aid of the device described a cheese is produced and prerpared for distribution with controlled tubular passage structure in the following manner according to the present invention. It is assumed in this explanatory example of an embodiment that the finished cheese is to have a dry matter content (DM content) of ca 40-79% and further that the device for concentrating the pretreated milk is an ultra-filtering device with a filter whose pore size is such that proteins, fats and oher constituents valuable for cheese production occurring in the milk cannot pass through the filter but are retained in the concentrated milk extracted as pre-cheese retained matter. It is further assumed that the heating device is a heat exchanger of convntional type with a capacity to heat and maintauin the concentrated milk for a sufficiently long time at a sufficiently high temperature to neutralise all harmful micro-organisms occurring in the milk, e.g. 68°C for ca 20 sec. Finally it is assumed that the milk selected for cheese production is standardised milk.

The standardised milk is introduced into the ultra-filtering device 6 through a product pipe 14 connected to the inlet 6a for concentration of the milk to a DM content corresponding to the DM content in the finished cheese, i.e. ca 40-70%. In the ultra-filtering device an aqueous fraction (whey), which is practically completely free from protein, fat and other valuable constituents occurring in the milk, is thus separated and this can pass freely through the filter. The separated aqueous fraction is drained off from the ultra-filtering device through an outlet pipe connected to the outlet 6c, while the concentrated milk (rich in protein and fat) retained by the filter is taken out of the ultra-filtering device through the process pipe 4 connected to the outlet 6b and with the aid of the pump 5 is pumped into and through the heat exchanger 7 for heating to ca 68°C for ca20 sec. From the heating device the heated, concentrated milk is taken out and pumped further through the process pipe 4 to the dosing/ mixing station 2 in which additives necessary for coagulation of the milk, e.g. rennet, together with other additives selected for the cheese production, e.g. citric acid enclosed in capsules of liposomes and also lactic acid bacteria used for fermentation of the citric acid under the development of CO₂ gas (e.g. Sc. diacetylactis and L. cremoris) are added to the milk with the aid of the dosing pump 8 through the pipe 9 connected in-line to the process pipe 4. The mixture of concentrated milk and the named additives is taken further through the process pipe 4 and into the mixing device 10 in order to mix the additives added homogeneously with the concentrated milk. From the mixing device the ready-mixed mixture is fed through the process pipe 4 connected to the outlet 10b into the filler pipe attached to the packaging machine 11 at the filling station 3 for drawing off and enclosing in packagings 12 intended for distribution, as shown schematically in the drawing.

With the aid of the device shown cheeses of practically any desired type can be produced and prepared for distribution in the manner described above according to the invention with the controlled tubular passage structure aimed at.

Through the present invention it is thus possible to produce a cheese and prepare it for distribution in a manner which can be carried out in practice completely automated on a rational industrial scale and which fully avoids or solves the previously discussed problem concerning non-existent or imperfect formation of tubular passages and produces cheese of various types with the controlled tubular passage structure aimed at.

## Claims

1. Method of producing cheese with tubular passage structure and preparing it for distribution, in which milk pretreated for cheese production is first concentrated through whey being separated from the milk and the concentrated milk is subsequently added to and mixed with additives necessary for coagulation of the milk and other optional additives for cheese production, **characterised by** the fact that the milk is concentrated to a dry matter content (DM content) corresponding to the DM content in the finished cheese, that as one of the said additives a chemical substance with the capacity to form carbon dioxide gas (CO₂ gas) under the action of lactic acid bacteria occurring in the milk is selected and that the mixture of concentrated milk and additives is filled and packaged directly into distribution-ready packagings, through which the coagulation and forming of the milk occur essentially altogether in the packagings with the result that holes in the coagulated milk developed by CO₂ gas formed lead to formation of the desired tubular passage structure in the finished cheese.

2. Method according to claim 1, **characterised by** the fact that the CO₂ producing lactic acid bacteria are added to the milk together with or simultaneously with the said chemical substance.

3. Method according to claim 1 or 2, **characterised by** the fact that the chemical substance is constituted by citric acid.

4. Method according to claim 3, **characterised by** the fact that the citric acid is added enclosed in capsules of material naturally occurring in cheese.

5. Method according to claim 4, **characterised by** the fact that the encapsulating material consists of butter fat or liposomes, preferably liposomes.

6. Method according to any of the foregoing claims, **characterised by** the fact that the lactic acid bacteria are selected between Sc. diacetylactis and L. cremoris.

## Patentansprüche

1. Verfahren zur Herstellung von Käse mit einer Struktur von röhrenförmigen Gängen und zur Vorbereitung desselben zum Vertrieb, bei dem Milch, die zur Herstellung von Käse vorbehandelt wurde, zunächst konzentriert wird, indem Molke von der Milch abgetrennt wird, die konzentrierte Milch anschliessend mit Zusätzen, die zur Gerinnung der Milch erforderlich sind, und gewünschtenfalls weiteren Zusätzen für die Käseherstellung versetzt und mit diesen gemischt wird, dadurch gekennzeichnet, dass die Milch bis zu einem Gehalt an Trockenmasse (TM-Gehalt) konzentriert wird, der dem TM-Gehalt im fertigen Käse entspricht, dass als einer der besagten Zusätze eine chemische Verbindung ausgewählt wird, die unter der Einwirkung von in der Milch vorkommenden Milchsäurebakterien zur Bildung von Kohlendioxidgas (CO₂-Gas) befähigt ist und dass die Mischung von konzentrierter Milch und Zusätzen direkt in Verpackungen abgefüllt und verpackt wird, die für den Vertrieb bereit sind, wodurch die Gerinnung und Formung der Milch im Wesentlichen zusammen in den Verpackungen eintritt, mit dem Ergebnis, dass Löcher, die in der geronnenen Milch durch das entstandene CO₂-Gas gebildet werden, zur Bildung der gewünschten Struktur von röhrenförmigen Gängen in dem fertigen Käse führen.

2. Verfahren nach Anspruch 1, dadurch gekennzeichnet, dass die CO₂-bildenden Bakterien zusammen oder gleichzeitig mit der besagten chemischen Verbindung der Milch beigegeben werden.

3. Verfahren nach Anspruch 1 oder 2, dadurch gekennzeichnet, dass die chemische Verbindung aus Citronensäure besteht.

4. Verfahren nach Anspruch 3, dadurch gekennzeichnet, dass die Citronensäure eingeschlossen in Kapseln aus einem natürlicherweise in Käse vorkommenden Material beigegeben wird.

5. Verfahren nach Anspruch 4, dadurch gekennzeichnet, dass das einschliessende Material aus Butterfett oder Liposomen, vorzugsweise Liposomen besteht.

6. Verfahren nach irgend einem der vorangehenden Ansprüche, dadurch gekennzeichnet, dass die Milchsäurebakterien aus Sc. diacetylactis und L. cremoris ausgewählt werden.

## Revendications

1. Procédé de fabrication de fromage présentant une structure à passages tubulaires et de préparation de celui-ci pour la distribution, selon lequel on concentre d'abord du lait prétraité pour la fabrication de fromage en séparant du lait le petit-lait et en ajoutant et mélangeant ensuite le lait concentré à des additifs nécessaires pour la coagulation du lait et à d'autres additifs facultatifs pour la fabrication de fromage, caractérisé en ce qu'on concentre le lait du jusqu'à une teneur en matières sèches (teneur MS) correspondant à la teneur MS dans le fromage à l'état fini, en ce qu'on choisît, pour constituer l'un desdits additifs, une substance chimique ayant la capacité de former du dioxyde de carbone gazeux (CO₂ gazeux) sous l'action des bactéries de l'acide lactique se présentant dans le lait et en ce qu'on verse et emballe directement le mélange de lait concentré et d'additifs dans des emballages prêts à la distribution, moyen par lequel la coagulation et la mise en forme du lait ont lieu essentiellement entièrement dans les emballages, ce qui a pour résultat que les trous créés dans le lait coagulé par le CO₂ gazeux formé entraînent la formation de la structure voulue de passages tubulaires dans le fromage à l'état fini.

2. Procédé suivant la revendication 1, caractérisé en ce que les bactéries de l'acide lactique produisant du CO2 sont ajoutées au lait avec ladite substance chimique ou en même temps que celle-ci.

3. Procédé suivant la revendication 1 ou 2, caractérisé en ce que la substance chimique est constituée d'acide citrique.

4. Procédé suivant la revendication 3, caractérisé en ce que l'acide citrique est ajouté en étant enfermé dans des capsules d'une matière existant naturellement dans le fromage.

5. Procédé suivant la revendication 4, caractérisé en ce que la matière d'encapsulation est constituée de matières grasses du beurre ou de liposomes, de préférence de liposomes.

6. Procédé suivant l'une quelconque des revendications précédentes, caractérisé en ce que les bactéries de l'acide lactique sont choisies entre Sc. diacétylactis et L. Cremoris.
